# EUROPEAN PATENT SPECIFICATION

(11) **EP 2 706 776 B1**
(45) Date of publication and mention of the grant of the patent: **07.11.2018**
(21) Application number: 12781852.4
(22) Date of filing: 09.05.2012
(51) Int. Cl.: H04W 24/10

(54) **METHOD AND DEVICE FOR REPORTING MEASUREMENT REPORTS OF NEIGHBOR CELLS**
VERFAHREN UND VORRICHTUNG ZUR MELDUNG VON MESSBERICHTEN VON NACHBARZELLEN
PROCÉDÉ ET DISPOSITIF PERMETTANT DE RAPPORTER DES RAPPORTS DE MESURE DES CELLULES VOISINES

(30) Priority: 09.05.2011 CN 201110118548
(43) Date of publication of application: 12.03.2014
(73) Proprietor: Huawei Technologies Co., Ltd., Longgang District Shenzhen, Guangdong 518129 (CN)
(72) Inventor: FANG, Ming, Shenzhen, Guangdong 518129 (CN); YU, Yongjun, Shenzhen, Guangdong 518129 (CN); WANG, Jiyong, Shenzhen, Guangdong 518129 (CN)
(74) Representative: Gill Jennings & Every LLP
(86) International application number: PCT/CN2012/075258
(87) International publication number: WO 2012/152220

(56) References cited:
- WO-A1-2009/130558
- CN-A- 101 742 579
- RESEARCH IN MOTION UK LTD: "Corrections to cell reporting requirements for multi-RAT MS", 3GPP DRAFT; GP-110476-WAS-110253 CR45008-REL8 REPORTING REQUIREMENTS FOR MULTI-RAT MS-REV2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Chengdu; 20110304, 3 March 2011 (2011-03-03), XP050486697, [retrieved on 2011-03-03]
- RENESAS ELECTRONICS EUROPE ET AL: "Corrections to measurement reporting of inter-RAT cells", 3GPP DRAFT; GP-110472, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Chengdu; 20110304, 3 March 2011 (2011-03-03), XP050486694, [retrieved on 2011-03-03]
- "Digital cellular telecommunications system (Phase 2+); Radio subsystem link control (3GPP TS 45.008 version 10.0.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP GERAN 1, no. V10.0.0, 1 April 2011 (2011-04-01), XP014065451,
- RENESAS ELECTRONICS EUROPE ET AL: "Corrections to measurement reporting of inter-RAT cells", 3GPP DRAFT; GP-110177, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Chengdu; 20110304, 23 February 2011 (2011-02-23), XP050486417, [retrieved on 2011-02-23]
- HUAWEI TECHNOLOGIES CO ET AL: "Discussion on Multi-RAT reporting", 3GPP DRAFT; GP-110153 DISCUSSION ON MULTI-RAT REPORTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Chengdu; 20110304, 23 February 2011 (2011-02-23), XP050486406, [retrieved on 2011-02-23]
- HUAWEI TECHNOLOGIES CO., LTD: 'Clarification of usage of E-UTRAN MEASUREMENT REPORT OFFSET (doc. NO. GP-090994)' 3GPP TSG-GERAN MEETING #42, GP-090994 14 May 2009, SHENZHEN, CHINA, pages 1 - 10, XP050415126 Retrieved from the Internet: <URL:http://www.3gpp.org/ftp/tsg_geran/TSG_ GERAN/GERAN_42_Shenzhen/Docs/Gp-090994.zip> [retrieved on 2009-05-11]
- HUAWEI TECHNOLOGIES CO., LTD: 'Clarification of usage of E-UTRAN MEASUREMENT REPORT OFFSET (doc. NO. GP-090628)' 3GPP TSG-GERAN MEETING #42, GP-090994 07 May 2009, SHENZHEN, CHINA, pages 1 - 10, XP050414986 Retrieved from the Internet: <URL:http://www.3gpp.org/ftp/tsg_geran/TSG_ GERAN/GERAN_42_Shenzhen/Docs/Gp-090628.zip> [retrieved on 2009-05-11]

## Description

### FIELD OF THE INVENTION

Embodiments of the present invention relate to the field of communications, and in particular to a method and a device for reporting a measurement report of an adjacent cell.

### BACKGROUND OF THE INVENTION

With the development of SAE (System Architecture Evolution, system architecture evolution)/LTE (Long Term Evolution, long term evolution) network technologies, the SAE/LTE network and 2G (2nd Generation, second generation) or 3G (3rd Generation, third generation) network coexist on a communications network. During a service, to ensure handover, a terminal must constantly measure adjacent cells and report in time the adjacent cells that meet a criterion of measurement report to the access network. The access network selects a target cell according to the measurement report values of adjacent cells reported by the terminal.

In a dedicated manner, the terminal selects different types of measurement reports according to the control parameter Report_type (report type) delivered by the network side, for example, common measurement report type MR (Measurement Report) and enhanced measurement report type EMR (Enhanced Measurement Report). Two optional types are also available for the measurement item reported in a measurement report: signal intensity and signal quality. The terminal determines, according to the control parameter delivered by the network, the measurement item to be reported. In addition, a common measurement report message reports measurement values of at most six adjacent cells.

For a terminal supporting multi-radio access technology Multi-RAT (Multi-Radio Access Technology), if adjacent cells of UTRAN (Universal Terrestrial Radio Access Network, universal terrestrial radio access network) and E-UTRAN (Evolved Universal Terrestrial Radio Access Network, evolved universal terrestrial radio access network) exist at the same time in the list of adjacent cells, the terminal needs to determine, according to the parameter XXX_MULTIRAT_REPORTING delivered by the network side, the maximum number of allowable cells in different access technologies. The measurement values of these reported cells must meet the measurement report criterion, that is, exceed a set threshold. Where, XXX indicates a different RAT/Mode, for example, UTRAN TDD (Time Division Duplex, time division duplex), UTRAN FDD (Frequency Division Duplex, frequency division duplex), E-UTRAN TDD, and E-UTRAN FDD.

The terminal determines, according to the control parameter XXX_MULTIRAT_REPORTING delivered by the network side, the number of allowable adjacent cells in different RAT/modes. During reporting of an EMR, the reported value (Reported value) of each adjacent cell is added to the offset XXX_REPORTING_OFFSET of the cell, results are sorted, and measurement reports of all adjacent cells are reported in sequence. The term "reported value" indicates a value mapped from an actual measurement value according to a preset mapping relationship. The measurement report includes this value, but not the actual measurement value.

As at most six adjacent cells can be reported in a common type measurement report MR message; however, in the current network coverage, multiple access technologies/modes, such as UTRAN TDD, UTRAN FDD, E-UTRAN TDD, and E-UTRAN FDD may occur, whereas the maximum number of cells allowed by the parameter XXX_MULTIRAT_ REPORTING is 3. Therefore, if adjacent cells that use more than two access technologies/modes exist, but the maximum number of cells allowed by the parameter XXX_MULTIRAT_ REPORTING is 3, the number of cells that meet the criterion for reporting measurement reports among the adjacent cells that use multiple access technologies/modes will be larger than the number of cells allowed by the measurement reports. In this case, the terminal does not know which cells among the cells that meet the criterion should be reported.

For a UTRAN FDD cell, the reported measurement item is the RSCP (Received Signal Code Power, received signal code power) or Ec/Io (signal quality).

For an E-UTRAN cell, the case is divided into two scenarios: reporting the measurement result by using a 6-bit (bit) space and reporting the measurement result by using a 3-bit (bit) space. The measurement result may be reported only by using the method in which the 3-bit space is used to indicate the measurement result in a common measurement report MR, whereas the measurement result is reported only by using the method in which the 6-bit space is used to indicate the measurement result in an enhanced measurement report EMR. Regardless of whether the 3-bit space is used for reporting or 6-bit space is used for reporting, the reported measurement item may be RSRP (Reference Signal Received Power, reference signal received power) or RSRQ (Reference Signal Received Quality, reference signal received quality).

The 3-bit space is used in the common type measurement report to report the measurement result of E-UTRAN adjacent cells, and the range of reported values is from 0 to 7, whereas the 6-bit space is used in the measurement report of adjacent cells in other access networks/modes (RAT/Mode) to report the measurement result, and the range of reported values is from 0 to 63 (when the reported measurement item is RSCP or RSRP) or from 0 to 34 (when the reported measurement item is Ec/Io) or from 0 to 49 (when the reported measurement item is RSRQ). The range of these reported values differs greatly from the range of the reported values of the E-UTRAN adjacent cells. Even if the method of adding the offset XXX_REPORTING _OFFSET to the reported values of adjacent cells that meet the criterion for reporting measurement reports in the EMR is used, multiple adjacent cells using RATs/Modes that meet the criterion for reporting measurement reports cannot be effectively sorted. When the reported space is limited, the terminal still fails to know which adjacent cells should be reported.

When adjacent cells using different RATs exists, and the number of these cells that use the RATs and meet the basic criterion for reporting measurement reports is greater than 6, the reported cell is selected according to the following rules:

R1: The measurement report includes a best cell for each RAT or manner, where the best cell is a cell that has the largest reported value.

R2: If the measurement report has available space, selected cells which use RATs/modes and whose quantity does not reach the threshold XXX_MULTIRAT_REPORTING needs to be included. If multiple cells that use RATs/modes meet the condition, the cells are sorted by priority according to the threshold XXX_MULTIRAT_REPORTING. If the threshold XXX_MULTIRAT_REPORTING is larger, the priority is larger; if the threshold XXX_MULTIRAT_REPORTING is equal, that is, the priority is the same, a sorting value is calculated according to the formula (6-bit reported value - XXX_REPORTING_THRESHOLD + XXX_REPORTING_OFFSET), and the cell that has the largest sorting value is selected. For an E-UTRAN adjacent cell, even if the measured report of the adjacent cell is reported by using a 3-bit mapping manner in the measurement report, the sorting value is calculated by using the 6-bit reported value mapping manner in sorting.

R3: R2 is repeated until no available space exists in the measurement report, or no adjacent cell that meets the basic criterion exists.

When multiple reported adjacent cells that use RATs need to be sorted, for example, when the 3-bit reporting method is used to report a measurement result, for the threshold XXX_REPORTING_THRESHOLD of an E-UTRAN adjacent cell, the offset E-UTRAN_FDD_MEASUREMENT_REPORT_OFFSET or E-UTRAN_TDD_ MEASUREMENT_REPORT_OFFSET delivered by the network side in the case of 3-bit reporting is still used. The measurement report offset corresponding to the 3-bit reported value manner is a measured value that has a unit of quantity. The reported value (reported value) is a value that does not have a unit of quantity. Therefore, the reported value and the measured value cannot be converted into each other. In this way, for E-UTRAN adjacent cells, the sorting values cannot be calculated by using the preceding formula (reference may be made to the formula in R2: 6-bit reported value - XXX_REPORTING_THRESHOLD + XXX_REPORTING_ OFFSET), and therefore the E-UTRAN adjacent cells cannot be sorted together with adjacent cells that use other RATs.

"Corrections to cell reporting requirements for multi-RAT MS", GP-110476 discloses a method for selecting cells to be included in the measurement report by a MS in the case that when the MS is measuring cells of more than one RAT and the number of positions available in the measurement report is lower than the number of cells that are available to be included in report. The method comprises selecting the best valid cells for each RAT/mode, prioritizing RATs/modes according to the value of XXX_MULTIRAT_REPORTING, and then by the difference between the reported value and XXX_REPORTING_THRESHOLD + XXX_REPORTING_OFFSET.

"Corrections to measurement reporting of inter-RAT cells", GP-110472 discloses rules for a MS to choose cells to be included in a measurement reporting. The rules can apply both in case of normal measurement reporting and of enhanced measurement reporting. The rules comprise that if there is not enough space in the report for all valid cells of each supported other radio access technology/mode, the cells shall be reported that have the highest quantity: 6 bit reported value - XXX_REPORTING_THRESHOLD + XXX_REPORTING_OFFSET. And even if 3bit reporting is used, 6 bit mapping for reported values are used in the above calculations.

"Digital cellular telecommunications system (Phase 2+); Radio subsystem link control (3GPP TS 45.008 version 10.0.0 Release 10)" discloses RXLEV in a measurement reporting is replaced by the relevant measurement quantity for cells of other radio access technologies and rules for a MS to choose cells to be included in the measurement reporting. The rules comprise that the cell for which (6 bit reported value - XXX_REPORTING_THRESHOLD + XXX_REPORTING_OFFSET) is highest is reported in case of equal XXX_MULTIRAT_REPORTING values, and 6 bit mapping for reported values are used in the calculations even if 3 bit reporting is used.

WO2009/130558 A1 discloses an apparatus which places an indication of a wireless communication system cell measurement in a measurement report message, where the indication comprises a corresponding frequency index, and a first part and a second part of an m-bit value representing a physical layer cell identification in a first and a second field, respectively, and a k-bit value representing a measurement result in the second field corresponding to the index.

"Corrections to measurement reporting of inter-RAT cells", GP-110177 discloses that if the total number of cells of other radio access technologies to be reported exceeds the number of positions available in the measurement report according to XXX_MULTIRAT_REPORTING parameters, the MS shall report the best valid cells. The best cell is the cell for which the following quantity is highest: in case of 3-bit reporting for E-UTRAN, (3 bit reported value + XXX_REPORTING_OFFSET); for UTRAN and in case of 6-bit reporting for E-UTRAN, (reported value - XXX_REPORTING_THRESHOLD + XXX_REPORTING_OFFSET).

"Discussion on Multi-RAT reporting", GP-110153 discloses proposals that removing dB from the definition of XXX_REPORTING_OFFSET and reporting other RAT cells in MR using the mechanism specified for EMR.

In view of the state of art as indicated above, there is a need for a solution to improve reporting of a measurement report of an adjacent cell.

### SUMMARY OF THE INVENTION

The invention is set out in the appended set of claims.

The embodiments and/or examples of the following description which are not covered by the appended claims are considered as not being part of the present invention.

In one aspect, a method for reporting a measurement report is provided, including: receiving a measurement report offset that is in a form of a 3-bit reported value and is delivered by a network; and mapping, by using a 6-bit reported value mapping manner, the measurement report offset to a mapping value expressed in a form of a 6-bit reported value, and using the mapping value expressed in the form of a 6-bit reported value as a measurement report threshold used when sorting measured values according to the following formula: 6-bit reported value - XXX_REPORTING_THRESHOLD + XXX_REPORTING_OFFSET, wherein XXX_REPORTING_THRESHOLD is the measurement report threshold and XXX_REPORTING_OFFSET is the measurement report offset.

In another aspect, a terminal device is provided, including: a receiving unit, configured to receive a measurement report offset in a form of a 3-bit reported value delivered by a network; and a mapping unit, configured to map, by using a 6-bit reported value mapping manner, the measurement report offset to a mapping value expressed in a form of a 6-bit reported value, and use the mapping value expressed in the form of a 6-bit reported value as a measurement report threshold used when sorting measured values according to the following formula: 6-bit reported value - XXX_REPORTING_THRESHOLD + XXX_REPORTING_OFFSET, wherein XXX_REPORTING_THRESHOLD is the measurement report threshold and XXX_REPORTING_OFFSET is the measurement report offset. According to the embodiments of the present invention, the measurement report offset in a form of a 3-bit reported value is mapped to a mapping value in a form of a 6-bit reported value, and the mapping value is used as the measurement report threshold when measured values are sorted during reporting of a measurement report. In this way, a sorting value required during reporting of the measurement report can be obtained, thereby effectively reporting a measurement report of an adjacent cell.

### BRIEF DESCRIPTION OF THE DRAWINGS

To illustrate the technical solutions in the embodiments of the present invention more clearly, the following outlines the accompanying drawings required for describing the embodiments or the prior art. Apparently, the accompanying drawings in the following merely show some embodiments of the present invention, and persons of ordinary skill in the art can derive other drawings from the accompanying drawings without creative efforts.
FIG. 1 is a schematic flow chart of a method for reporting a measurement report of an adjacent cell according to an embodiment of the present invention;
FIG. 2 is a schematic flow chart of a method for reporting a measurement report of an adjacent cell according to another embodiment of the present invention;
FIG. 3 is a schematic flow chart of a method for reporting a measurement report of an adjacent cell according to another embodiment of the present invention;
FIG. 4 is a structural block diagram of a terminal device according to an embodiment of the present invention;
FIG. 5 is a structural block diagram of a terminal device according to another embodiment of the present invention; and
FIG. 6 is a structural block diagram of a network side device according to another embodiment of the present invention.

### DETAILED DESCRIPTION OF THE EMBODIMENTS

The technical solutions in the embodiments of the present invention are clearly and completely described with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without creative effects shall fall within the protection scope of the appended claims.

When measurement reports of adjacent cells using multiple access technologies/modes are reported by using common measurement reports, if the number of adjacent cells that meet a criterion for measurement reports exceeds the reporting space of the measurement reports, for E-UTRAN adjacent cells, in order to use a formula regulated in a standard to calculate a sorting value, a threshold corresponding to a reported value needs to be acquired.

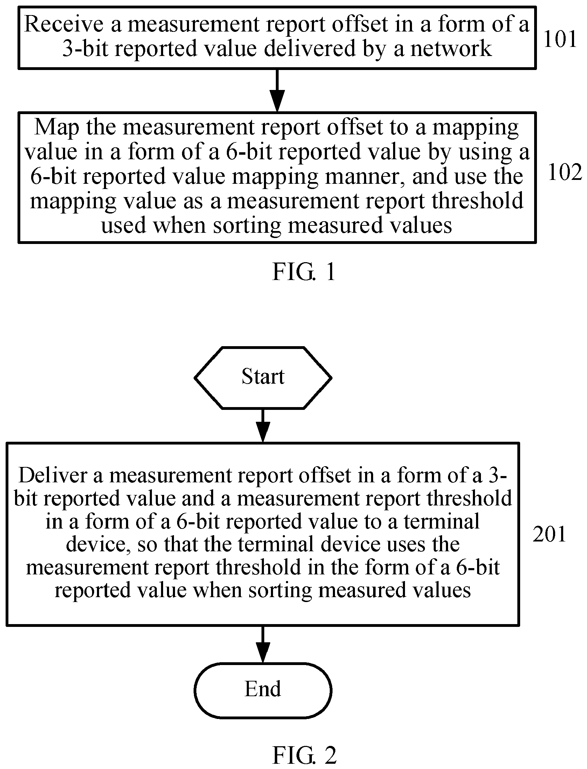

FIG. 1 is a schematic flow chart of a method for reporting a measurement report of an adjacent cell according to an embodiment of the present invention. The method in FIG. 1 is executed by a terminal device.

101: Receive a measurement report offset that is in a form of a 3-bit reported value and is delivered by a network.

For example, a terminal device can receive a measurement report offset E-UTRAN_XXX_MEASUREMENT_REPORT_OFFSET for an E-UTRAN adjacent cell delivered by a network side, where XXX indicates an FDD or a TDD mode. The measurement report offset is a parameter value corresponding to a form of a 3-bit reported value. The measurement report offset may be a signal strength value or a signal quality value, but not a mapping value or a reported value.

102: Map the measurement report offset to a mapping value in a form of a 6-bit reported value by using a 6-bit reported value mapping manner, and use the mapping value in the form of a 6-bit reported value as a measurement report threshold used when sorting measured values.

The 6-bit reported value mapping manner described in the following can be used to obtain the corresponding mapping value as the measurement report threshold E-UTRAN_XXX_ REPORTING_THRESHOLD in the calculation formula in R2: 6 bit reported value - E-UTRAN_XXX_REPORTING_THRESHOLD + E-UTRAN_XXX_REPORTING_OFFSET, where XXX indicates an FDD or a TDD mode. In other words, the received measurement report offset (signal strength value or signal quality value) is mapped to a mapping value in a form of a 6-bit reported value according to the 6-bit reported value mapping manner described in the following.

6-bit reported value mapping manner: using a 6-bit space to indicate a measurement result

If an actual measured value is RSRP, the mapping relationship between a reported value (mapping value) included in a measurement report and an actual measured value is as follows:

| | | | |
|---|---|---|---|
| RSRP | 0 | = | Smaller than -140 dBm |
| RSRP | 1 | = | -140 dBm to -138 dBm |
| | | ... ... | |
| RSRP | 17 | = | -108 dBm to -106 dBm |
| RSRP | 18 | = | -106 dBm to -105 dBm |
| RSRP | 19 | = | -105 dBm to -104 dBm |
| RSRP | 44 | = | -80 dBm to -79 dBm |
| RSRP | 45 | = | -79 dBm to -78 dBm |
| RSRP | 46 | = | -78 dBm to -76 dBm |
| | | ... ... | |
| RSRP | 62 | = | -46 dBm to -44 dBm |
| RSRP | 63 | = | Larger than or equal to -44 dBm |

If the actual measured value is RSRQ, the mapping relationship between the reported value included in the measurement report and the actual measured value is as follows:

| | | | |
|---|---|---|---|
| RSRQ | 0 | = | Smaller than -19.5 dB |
| RSRQ | 1 | = | -19.5 dB to -19 dB |
| RSRQ | 2 | = | -19.5 dB to -18.5 dB |
| | ... ... | | |
| RSRQ | 33 | = | -3.5 dB to -3 dB |
| RSRQ | 34 | = | Larger than or equal to -3 dB |

For example, if the measurement report offset in the form of a 3-bit reported value received in 101 is E-UTRAN_FDD_MEASUREMENT_REPORT_OFFSET, the measurement report threshold obtained in 102 is E-UTRAN_FDD_REPORTING_THRESHOLD. Specifically, as an example, when the received E-UTRAN_FDD_MEASUREMENT_REPORT_OFFSET is -107 dBm, it is obtained that the mapping value is 17 according to a mapping relationship table between the signal strength value and the mapping value, and accordingly, it is obtained that the E-UTRAN_FDD_REPORTING_THRESHOLD is 17. As another example, when the received E-UTRAN FDD MEASUREMENT REPORT OFFSET is -3.4 dB, it is obtained that the mapping value is 33 according to a mapping relationship table between the signal quality value and the mapping value, and accordingly, it is obtained that the E-UTRAN FDD REPORTING THRESHOLD is 33.

In addition, when the measurement report offset in the form of a 3-bit reported value received in 101 is E-UTRAN_TDD_MEASUREMENT_REPORT_OFFSET, the measurement report threshold obtained in 102 is E-UTRAN_TDD_REPORTING_THRESHOLD. Specifically, as an example, when the received E-UTRAN_TDD_MEASUREMENT_REPORT_OFFSET is -107 dBm, it is obtained that the mapping value is 17 according to the mapping relationship table between the signal strength value and the mapping value, and accordingly, it is obtained that the E-UTRAN_TDD_REPORTING_THRESHOLD is 17. As another example, when the received E-UTRAN_TDD_MEASUREMENT_REPORT_OFFSET is -3.4 dB, it is obtained that the mapping value is 33 according to the mapping relationship table between the signal quality value and the mapping value, and accordingly, it is obtained that the E-UTRAN_TDD_REPORTING_THRESHOLD is 33.

The measurement report offset is a measurement report offset of an E-UTRAN adjacent cell, and the measurement report threshold is a measurement report threshold of the E-UTRAN adjacent cell.

The obtained measurement report threshold E-UTRAN_XXX_ REPORTING_THRESHOLD is a mapping value that complies with the form of a 6-bit reported value, and therefore it can be used in the calculation formula in R2.

According to the embodiment of the present invention, the measurement report offset in a form of a 3-bit reported value is mapped to a mapping value in a form of a 6-bit reported value, and the mapping value is used as the measurement report threshold when measured values are sorted during reporting of a measurement report. In this way, a sorting value required during reporting of the measurement report can be obtained, thereby effectively reporting a measurement report of an adjacent cell.

FIG. 2 is a schematic flow chart of a method for reporting a measurement report of an adjacent cell according to another embodiment of the present invention. The method in FIG. 2 is executed by a network side device. An example of the network side device is a base station or base station controller.

201: The network side device delivers a measurement report offset in a form of a 3-bit reported value and a measurement report threshold in a form of a 6-bit reported value to a terminal device, so that the terminal device uses the measurement report threshold in the form of a 6-bit reported value when sorting measured values.

When delivering measurement report parameters (including a measurement report offset E-UTRAN_XXX_MEASUREMENT_REPORT_OFFSET in a form of a 3-bit reported value) of an E-UTRAN adjacent cell that are related to a 3-bit measurement report value reporting manner, the network delivers a measurement report threshold E-UTRAN_XXX_REPORTING THRESHOLD that is related to a form of a 6-bit reported value at the same time.

For example, when the delivered measurement report offset is E-UTRAN_FDD_MEASUREMENT_REPORT_OFFSET, the measurement report threshold that is in the form of a 6-bit reported value and is delivered at the same time is E-UTRAN_FDD_REPORTING_THRESHOLD.

In addition, when the delivered measurement report offset is E-UTRAN_TDD_MEASUREMENT_REPORT_OFFSET, the measurement report threshold that is in the form of a 6-bit reported value and is delivered at the same time is E-UTRAN_TDD_REPORTING_THRESHOLD.

As the terminal device directly obtains the measurement report threshold in the form of a 6-bit reported value, the terminal device directly uses the measurement report threshold E-UTRAN_XXX_REPORTING_THRESHOLD obtained in 201 when calculating a sorting value by using the formula in R2: 6 bit reported value - E-UTRAN_XXX_REPORTING_ THRESHOLD + E-UTRAN_XXX_REPORTING_OFFSET, where XXX indicates an FDD or a TDD mode.

According to the embodiment of the present invention, when a terminal needs to report an adjacent cell by using a 3-bit reporting manner, it can directly acquire, from a network, a measurement report threshold in a form of a 6-bit reported value, and uses the measurement report threshold in the form of a 6-bit reported value when sorting measured values during reporting of a measurement report. In this way, a sorting value required during reporting of the measurement report can be obtained, thereby effectively reporting a measurement report of an adjacent cell.

When the number of cells that meet a reporting criterion among adjacent cells that use multiple access technologies/modes exceeds the space allowed in a measurement report, the terminal can acquire, according to the method provided in this solution, a measurement report threshold required during the sorting to sort the cells that meet a reporting criterion, and selectively report measurement reports of cells that use different access technologies/modes.

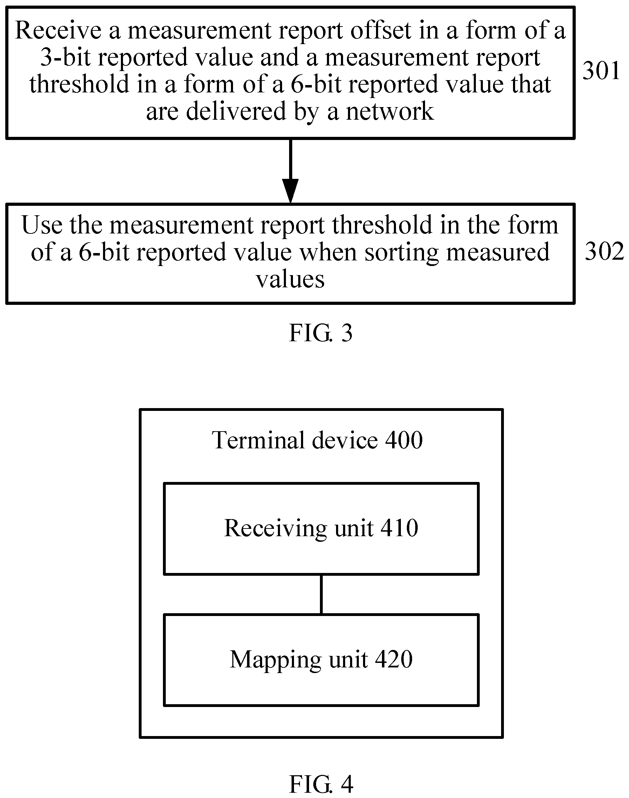

FIG. 3 is a schematic flow chart of a method for reporting a measurement report of an adjacent cell according to another embodiment of the present invention. The method in FIG. 3 is executed by a terminal device. An example of the terminal device is a user equipment UE.

301: Receive a measurement report offset in a form of a 3-bit reported value and a measurement report threshold in a form of a 6-bit reported value that are delivered by a network.

When delivering measurement report parameters (including a measurement report offset E-UTRAN_XXX_MEASUREMENT_REPORT_OFFSET in a form of a 3-bit reported value) of an E-UTRAN adjacent cell that are related to a 3-bit measurement report value reporting manner, the network delivers a measurement report threshold E-UTRAN_XXX_REPORTING_THRESHOLD that is related to a form of a 6-bit reported value at the same time.

For example, when the delivered measurement report offset is E-UTRAN_FDD_MEASUREMENT_REPORT_OFFSET, the measurement report threshold that is in the form of a 6-bit reported value and is delivered at the same time is E-UTRAN_FDD_REPORTING_THRESHOLD.

In addition, when the delivered measurement report offset is E-UTRAN_TDD_MEASUREMENT_REPORT_OFFSET, the measurement report threshold that is in the form of a 6-bit reported value and is delivered at the same time is E-UTRAN_TDD_REPORTING_THRESHOLD.

302: Use the measurement report threshold in the form of a 6-bit reported value when sorting measured values.

As the terminal device directly obtains the measurement report threshold in the form of a 6-bit reported value, the terminal device directly uses the measurement report threshold E-UTRAN_XXX_REPORTING_THRESHOLD obtained in 201 when calculating a sorting value by using the formula in R2: 6 bit reported value - E-UTRAN_XXX_REPORTING_ THRESHOLD + E-UTRAN_XXX_REPORTING_OFFSET, where XXX indicates an FDD or a TDD mode.

According to the embodiment of the present invention, when a terminal needs to report an adjacent cell by using a 3-bit reporting manner, it can directly acquire a measurement report threshold in a form of a 6-bit reported value from a network, and uses the measurement report threshold in the form of a 6-bit reported value when sorting measured values during reporting of a measurement report. In this way, a sorting value required during reporting of the measurement report can be obtained, thereby effectively reporting a measurement report of an adjacent cell.

FIG. 4 is a structural block diagram of a terminal device according to an embodiment of the present invention. A terminal device 400 in FIG. 4 includes a receiving unit 410 and a mapping unit 420.

The receiving unit 410 is configured to receive a measurement report offset that is in a form of a 3-bit reported value and is delivered by a network. The mapping unit 420 is configured to map the measurement report offset to a mapping value in a form of a 6-bit reported value by using a 6-bit reported value mapping manner, and use the mapping value as a measurement report threshold used when measured values are sorted during reporting of a measurement report.

According to this embodiment of the present invention, the measurement report offset in a form of a 3-bit reported value is mapped to a mapping value in a form of a 6-bit reported value, and the mapping value is used as the measurement report threshold when measured values are sorted during reporting of a measurement report. In this way, a sorting value required during reporting of the measurement report can be obtained, thereby effectively reporting a measurement report of an adjacent cell.

According to the embodiment in FIG. 4, the terminal device 400 receives a measurement report offset E-UTRAN_XXX_MEASUREMENT_REPORT_OFFSET and maps it to the E-UTRAN_XXX_REPORTING_THRESHOLD required for calculating a sorting value, where XXX indicates an FDD or a TDD mode. No change on a network side is required.

For example, when the measurement report offset is E-UTRAN_FDD_MEASUREMENT_REPORT_OFFSET, the measurement report threshold is E-UTRAN_FDD_REPORTING_THRESHOLD.

Alternatively, when the measurement report offset is E-UTRAN_TDD_MEASUREMENT_REPORT_OFFSET, the measurement report threshold is E-UTRAN_TDD_REPORTING_THRESHOLD.

A communication system according to the embodiment of the present invention may include the terminal device 400 and a corresponding network side device.

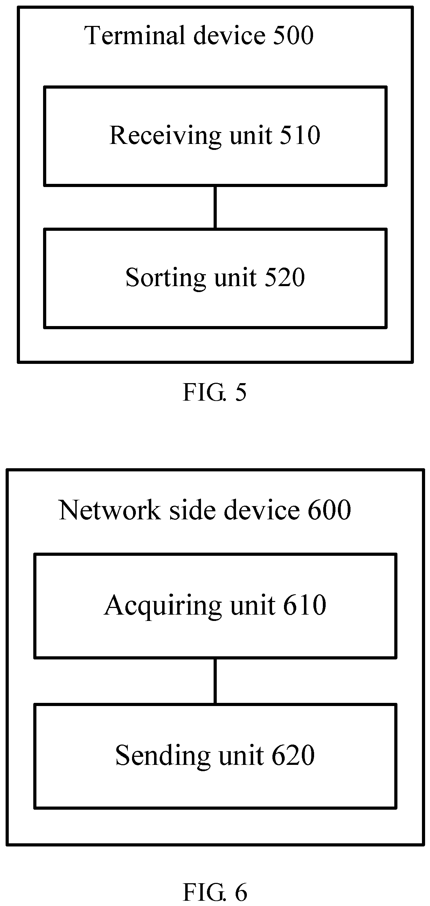

FIG. 5 is a structural block diagram of a terminal device according to another embodiment of the present invention. A terminal device 500 in FIG. 5 includes a receiving unit 510 and a sorting unit 520.

The receiving unit 510 receives a measurement report offset in a form of a 3-bit reported value and a measurement report threshold in a form of a 6-bit reported value that are delivered by a network. The sorting unit 520 uses the measurement report threshold in the form of a 6-bit reported value when sorting measured values.

According to this embodiment of the present invention, when a terminal needs to report an adjacent cell by using a 3-bit reporting manner, it can directly acquire a measurement report threshold in a form of a 6-bit reported value from a network, and uses the measurement report threshold in the form of a 6-bit reported value when measured values are sorted during reporting of a measurement report. In this way, a sorting value required during reporting of the measurement report can be obtained, thereby effectively reporting a measurement report of an adjacent cell.

According to the embodiment in FIG. 5, when delivering the measurement report offset E-UTRAN_XXX_MEASUREMENT_REPORT_OFFSET in the form of a 3-bit reported value according to an existing method, the network further delivers the measurement report threshold E-UTRAN_XXX_REPORTING_THRESHOLD in the form of a 6-bit reported value. In this way, the terminal device 500 may directly use the measurement report threshold delivered by the network when calculating a sorting value. XXX is a TDD or FDD mode.

For example, if the measurement report offset received by the receiving unit 510 is E-UTRAN_FDD_MEASUREMENT_REPORT_OFFSET, the measurement report threshold received by the receiving unit 510 is E-UTRAN_FDD_REPORTING_THRESHOLD.

Alternatively, if the measurement report offset received by the receiving unit 510 is E-UTRAN_TDD_MEASUREMENT_REPORT OFFSET, the measurement report threshold received by the receiving unit 510 is E-UTRAN_TDD_REPORTING_THRESHOLD.

FIG. 6 is a structural block diagram of a network side device according to another embodiment of the present invention. A network side device 600 in FIG. 6 includes an acquiring unit 610 and a sending unit 620.

The acquiring unit 610 acquires a measurement report offset in a form of a 3-bit reported value and a measurement report threshold in a form of a 6-bit reported value. The sending unit 620 delivers the measurement report offset in the form of a 3-bit reported value and the measurement report threshold in the form of a 6-bit reported value to a terminal device, so that the terminal device uses the measurement report threshold in the form of a 6-bit reported value when sorting measured values.

According to this embodiment of the present invention, when a terminal needs to report an adjacent cell by using a 3-bit reporting manner, it can directly acquire a measurement report threshold in a form of a 6-bit reported value from a network, and uses the measurement report threshold in the form of a 6-bit reported value when sorting measured values during reporting of a measurement report. In this way, a sorting value required during reporting of the measurement report can be obtained, thereby effectively reporting a measurement report of an adjacent cell.

According to the embodiment in FIG. 6, when delivering the measurement report offset E-UTRAN_XXX_MEASUREMENT_REPORT_OFFSET in the form of a 3-bit reported value according to an existing method, the network side device 600 further delivers the measurement report threshold E-UTRAN_XXX_REPORTING_THRESHOLD in the form of a 6-bit reported value. In this way, the terminal device may directly use the measurement report threshold delivered by the network side device 600, when calculating sorting values.

For example, when the measurement report offset in the form of a 3-bit reported value is E-UTRAN_FDD_MEASUREMENT_REPORT OFFSET, the measurement report threshold in the form of a 6-bit reported value is E-UTRAN_FDD_REPORTING_THRESHOLD.

Alternatively, when the measurement report offset in the form of a 3-bit reported value is E-UTRAN_TDD_MEASUREMENT_REPORT_OFFSET, the measurement report threshold in the form of a 6-bit reported value is E-UTRAN_TDD_REPORTING_THRESHOLD.

A communication system according to this embodiment of the present invention includes the terminal device or network side device.

Persons of ordinary skill in the art may understand that, in combination with the examples described in the embodiments herein, units and algorithm steps can be implemented by electronic hardware, computer software, or a combination of the electronic hardware and computer software. In order to clearly describe the interchangeability between the hardware and the software, the foregoing has generally described compositions and steps of each embodiment according to functions. Whether the functions are executed by hardware or software depends on particular applications and design constraint conditions of the technical solutions. Persons skilled in the art can use different methods to implement the described functions for every particular application, but it should not be considered that the implementation goes beyond the scope of the present invention.

It can be clearly understood by persons skilled in the art that, for the purpose of convenient and brief description, for the detailed working process of the foregoing system, apparatus and unit, reference may be made to the corresponding process in the method embodiments, and details will not be described herein again.

In the embodiments provided in the present application, it should be understood that the disclosed system, apparatus, and method may be implemented in other manners. For example, the described apparatus embodiments are merely exemplary. For example, the unit division is merely logical function division and can be other division in actual implementation. For example, multiple units or components can be combined or integrated into another system, or some features can be ignored or not performed. In addition, the displayed or discussed mutual coupling or direct coupling or communication connection may be implemented through some interfaces. The indirect coupling or communication connection between the apparatuses or units may be implemented in electronic, mechanical or other forms.

The units described as separate parts may be or may not be physically separate, and parts displayed as units may be or may not be physical units, that is, may be located in one position, or may be distributed on multiple network elements. A part or all of the units may be selected according to actual needs to achieve the objectives of the solutions of the embodiments.

In addition, functional units in each embodiment of the present invention may be integrated into one processing unit, or each of the units may exist alone physically, or two or more units are integrated into one unit. The integrated unit may be implemented in a form of hardware, or may be implemented in a form of a software functional unit.

When being implemented in the form of a software functional unit and sold or used as a separate product, the integrated unit may be stored in a computer-readable storage medium. Based on such understanding, the essence of the technical solutions of the present invention, or the part making contributions to the prior art, or all or a part of the technical solutions may be embodied in a form of a software product. The computer software product is stored in a storage medium and includes several instructions for instructing a computer device (which may be a personal computer, a server, or a network device, or the like) to execute all or a part of steps of the method described in each embodiment of the present invention. The storage medium includes: any medium that can store program codes, such as a U-disk, a removable hard disk, a read-only memory (ROM, Read-Only Memory), a random access memory (RAM, Random Access Memory), a magnetic disk, or an optical disk.

The foregoing description is merely exemplary embodiments of the present invention, but not intended to limit the protection scope of the present invention. Any variation or replacement made by persons skilled in the art within the technical scope disclosed by the present invention shall fall within the protection scope of the appended claims.

## Claims

1. A method for reporting a measurement report of an adjacent cell performed by a terminal device, **characterized by** comprising:
receiving (101) a measurement report offset in a form of a 3-bit reported value delivered by a network; and
mapping (102) the measurement report offset to a mapping value in a form of a 6-bit reported value by using a 6-bit reported value mapping manner, and using the mapping value in the form of a 6-bit reported value as a measurement report threshold used when sorting measured values according to the following formula: 6-bit reported value - XXX_REPORTING_THRESHOLD + XXX_REPORTING_OFFSET, wherein XXX_REPORTING_THRESHOLD is the measurement report threshold and XXX_REPORTING_OFFSET is the measurement report offset.

2. The method according to claim 1, wherein the measurement report offset is an evolved universal terrestrial radio access network frequency division duplex measurement report offset E-UTRAN_FDD_ MEASUREMENT_REPORT_OFFSET, and the measurement report threshold is an evolved universal terrestrial radio access network frequency division duplex measurement report threshold E-UTRAN_FDD_REPORTING_THRESHOLD; or,
the measurement report offset is an evolved universal terrestrial radio access network time division duplex measurement report offset E-UTRAN_TDD_MEASUREMENT_REPORT_OFFSET, and the measurement report threshold is an evolved universal terrestrial radio access network time division duplex measurement report threshold E-UTRAN_TDD_REPORTING_THRESHOLD.

3. The method according to claim 1, wherein the measurement report offset is a measurement report offset of an evolved universal terrestrial radio access network E-UTRAN adjacent cell, and the measurement report threshold is a measurement report threshold of an evolved universal terrestrial radio access network E-UTRAN adjacent cell.

4. A terminal device (400), **characterized by** comprising:
a receiving unit (410), configured to receive a measurement report offset in a form of a 3-bit reported value delivered by a network; and
a mapping unit (420), configured to map the measurement report offset to a mapping value in a form of a 6-bit reported value by using a 6-bit reported value mapping manner, and use the mapping value in the form of a 6-bit reported value as a measurement report threshold used when sorting measured values according to the following formula: 6-bit reported value - XXX_REPORTING_THRESHOLD + XXX_REPORTING_OFFSET, wherein XXX_REPORTING_THRESHOLD is the measurement report threshold and XXX_REPORTING_OFFSET is the measurement report offset.

5. The terminal device according to claim 4, wherein the measurement report offset is an evolved universal terrestrial radio access network frequency division duplex measurement report offset E-UTRAN_FDD_MEASUREMENT_REPORT_OFFSET, and the measurement report threshold is an evolved universal terrestrial radio access network frequency division duplex measurement report threshold E-UTRAN_FDD_REPORTING_THRESHOLD; or,
the measurement report offset is an evolved universal terrestrial radio access network time division duplex measurement report offset E-UTRAN_TDD_MEASUREMENT_REPORT_OFFSET, and the measurement report threshold is an evolved universal terrestrial radio access network time division duplex measurement report threshold E-UTRAN_TDD_REPORTING_THRESHOLD.

6. The terminal device according to claim 4, wherein the measurement report offset is a measurement report offset of an evolved universal terrestrial radio access network E-UTRAN adjacent cell, and the measurement report threshold is a measurement report threshold of an evolved universal terrestrial radio access network E-UTRAN adjacent cell.

## Patentansprüche

1. Verfahren zur Meldung eines Messberichts einer benachbarten Zelle, das durch ein Endgerät durchgeführt wird, **dadurch gekennzeichnet, dass** das Verfahren umfasst:
Empfangen (101) eines Messbericht-Offsets in Form eines 3-Bit-Meldungswerts, der durch ein Netzwerk geliefert wird; und
Abbilden (102) des Messbericht-Offsets auf einen Abbildungswert in Form eines 6-Bit-Meldungswert unter Verwendung einer 6-Bit-Meldungswertabbildungsweise und Verwenden des Abbildungswerts in Form eines 6-Bit-Meldungswerts als einen Messbericht-Schwellwert, der genutzt wird, wenn Messwerte gemäß der folgenden Formel sortiert werden: 6-Bit-Meldungswert - XXX_REPORTING_THRESHOLD + XXX_REPORTING_OFFSET, wobei XXX_REPORTING_THRESHOLD der Messbericht-Schwellwert ist und XXX_REPORTING_OFFSET der Messbericht-Offset ist.

2. Verfahren nach Anspruch 1, wobei der Messbericht-Offset ein weiterentwickelter universaler terrestrischer Funkzugangsnetz-Frequenzduplexmessbericht-Offset (Evolved Universal Terrestrial Radio Access Network Frequency Division Duplex Measurement Report Offset) E-UTRAN_FDD_ MEASUREMENT REPORT OFFSET ist, und der Messbericht-Schwellwert ein weiterentwickelter universaler terrestrischer Funkzugangsnetz-Frequenzduplexmessbericht-Offset-Schwellwert (Evolved Universal Terrestrial Radio Access Network Frequency Division Duplex Measurement Report Threshold) E-UTRAN_FDD_REPORTING_THRESHOLD ist; oder
der Messbericht-Offset ein weiterentwickelter universaler terrestrischer Funkzugangsnetz-Zeitduplex-Messbericht-Offset (Evolved Universal Terrestrial Radio Access Network Time Division Duplex Measurement Report Offset) E-UTRAN_TDD_MEASUREMENT_REPORT_OFFSET ist, und der Messbericht-Schwellwert ein weiterentwickelter universaler terrestrischer Funkzugangsnetz-Zeitduplex-Messbericht-Schwellwert (Evolved Universal Terrestrial Radio Access Network Time Division Duplex Measurement Report Threshold) E-UTRAN_TDD_ REPORTING_THRESHOLD ist.

3. Verfahren nach Anspruch 1, wobei der Messbericht-Offset ein Messbericht-Offset einer weiterentwickelten universalen terrestrischen Funkzugangsnetz-E-UTRAN-Nachbarzelle ist, und der Messbericht-Schwellwert ein Messbericht-Schwellwert einer weiterentwickelten universalen terrestrischen Funkzugangsnetz-E-UTRAN-Nachbarzelle ist.

4. Endgerät (400), **dadurch gekennzeichnet, dass** es aufweist:
eine Empfangseinheit (410), die dazu eingerichtet ist, einen Messbericht-Offset in Form eines 3-Bit-Meldungswerts zu empfangen, der durch ein Netzwerk geliefert wird; und
eine Abbildungseinheit (420), die dazu eingerichtet ist, den Messbericht-Offset auf einen Abbildungswert in Form eines 6-Bit-Meldungswerts unter Verwendung einer 6-Bit-Meldungswertabbildungsweise abzubilden und den Abbildungswert in Form eines 6-Bit-Meldungswert als einen Messbericht-Schwellwert zu verwenden, der genutzt wird, wenn Messwerte gemäß der folgenden Formel sortiert werden: 6-Bit-Meldungswert - XXX_REPORTING_THRESHOLD + XXX_REPORTING_OFFSET, wobei XXX_REPORTING_THRES HOLD der Messbericht-Schwellwert ist und XXX_REPORTING_OFFSET der Messbericht-Offset ist.

5. Endgerät nach Anspruch 4, wobei der Messbericht-Offset ein weiterentwickelter universaler terrestrischer Funkzugangsnetz-Frequenzduplexmessbericht-Offset E-UTRAN_FDD_MEASUREMENT_REPORT_OFFSET ist und der Messbericht-Schwellwert ein weiterentwickelter universaler terrestrischer Funkzugangsnetz-Frequenzduplexmessbericht-Offset-Schwellwert E-UTRAN_FDD_REPORTING_THRESHOLD ist; oder
der Messbericht-Offset ein weiterentwickelter universaler terrestrischer Funkzugangsnetz-Zeitduplex-Messbericht-Offset E-UTRAN_TDD_MEASUREMENT_REPORT_OFFSET ist, und der Messbericht-Schwellwert ein weiterentwickelter universaler terrestrischer Funkzugangsnetz-Zeitduplex-Messbericht-Schwellwert E-UTRAN_TDD_ REPORTING_THRESHOLD ist.

6. Endgerät nach Anspruch 4, wobei der Messbericht-Offset ein Messbericht-Offset einer weiterentwickelten universalen terrestrischen Funkzugangsnetz-E-UTRAN-Nachbarzelle ist und der Messbericht-Schwellwert ein Messbericht-Schwellwert einer weiterentwickelten universalen terrestrischen Funkzugangsnetz-E-UTRAN-Nachbarzelle ist.

## Revendications

1. Procédé pour rapporter un rapport de mesure d'une cellule adjacente, exécuté par un dispositif terminal, **caractérisé en ce qu'**il comprend les étapes consistant à :
recevoir (101) un décalage de rapport de mesure sous la forme d'une valeur rapportée sur 3 bits fournie par un réseau ; et
mettre en correspondance (102) le décalage de rapport de mesure avec une valeur de mise en correspondance sous la forme d'une valeur rapportée sur 6 bits au moyen d'un mode de mise en correspondance de valeurs rapportées sur 6 bits, et utiliser la valeur de mise en correspondance sous la forme d'une valeur rapportée sur 6 bits comme seuil de rapport de mesure utilisé lors du tri de valeurs mesurées selon la formule suivante : valeur rapportée sur 6 bits - XXX_REPORTING_THRESHOLD + XXX_REPORTING_OFFSET, où XXX_REPORTING_THRESHOLD est le seuil de rapport de mesure et XXX_REPORTING_OFFSET est le décalage de rapport de mesure.

2. Procédé selon la revendication 1, dans lequel le décalage de rapport de mesure est un décalage de rapport de mesure de duplexage par répartition en fréquence de réseau d'accès radio terrestre universel évolué E-UTRAN_FDD_ MEASUREMENT_REPORT_OFFSET, et le seuil de rapport de mesure est un seuil de rapport de mesure de duplexage par répartition en fréquence de réseau d'accès radio terrestre universel évolué E-UTRAN_FDD_REPORTING_THRESHOLD ; ou le décalage de rapport de mesure est un décalage de rapport de mesure de duplexage par répartition dans le temps de réseau d'accès radio terrestre universel évolué E-UTRAN_TDD_MEASUREMENT_REPORT_OFFSET, et le seuil de rapport de mesure est un seuil de rapport de mesure de duplexage par répartition dans le temps de réseau d'accès radio terrestre universel évolué E-UTRAN_TDD_REPORTING_THRESHOLD.

3. Procédé selon la revendication 1, dans lequel le décalage de rapport de mesure est un décalage de rapport de mesure d'une cellule adjacente de réseau d'accès radio terrestre universel évolué E-UTRAN, et le seuil de rapport de mesure est un seuil de rapport de mesure d'une cellule adjacente de réseau d'accès radio terrestre universel évolué E-UTRAN.

4. Dispositif terminal (400), **caractérisé en ce qu'**il comprend :
une unité de réception (410), configurée pour recevoir un décalage de rapport de mesure sous la forme d'une valeur rapportée sur 3 bits fournie par un réseau ; et
une unité de mise en correspondance (420), configurée pour mettre en correspondance le décalage de rapport de mesure avec une valeur de mise en correspondance sous la forme d'une valeur rapportée sur 6 bits au moyen d'un mode de mise en correspondance de valeurs rapportées sur 6 bits, et utiliser la valeur de mise en correspondance sous la forme d'une valeur rapportée sur 6 bits comme seuil de rapport de mesure utilisé lors du tri de valeurs mesurées selon la formule suivante : valeur rapportée sur 6 bits - XXX REPORTING_THRESHOLD + XXX_REPORTING_OFFSET, où XXX_REPORTING_THRESHOLD est le seuil de rapport de mesure et XXX_REPORTING_OFFSET est le décalage de rapport de mesure.

5. Dispositif terminal selon la revendication 4, dans lequel le décalage de rapport de mesure est un décalage de rapport de mesure de duplexage par répartition en fréquence de réseau d'accès radio terrestre universel évolué E-UTRAN_FDD_ MEASUREMENT_REPORT_OFFSET, et le seuil de rapport de mesure est un seuil de rapport de mesure de duplexage par répartition en fréquence de réseau d'accès radio terrestre universel évolué E-UTRAN_FDD_REPORTING_THRESHOLD ; ou le décalage de rapport de mesure est un décalage de rapport de mesure de duplexage par répartition dans le temps de réseau d'accès radio terrestre universel évolué E-UTRAN_TDD_MEASUREMENT_REPORT_OFFSET, et le seuil de rapport de mesure est un seuil de rapport de mesure de duplexage par répartition dans le temps de réseau d'accès radio terrestre universel évolué E-UTRAN_TDD_REPORTING_THRESHOLD.

6. Dispositif terminal selon la revendication 4, dans lequel le décalage de rapport de mesure est un décalage de rapport de mesure d'une cellule adjacente de réseau d'accès radio terrestre universel évolué E-UTRAN, et le seuil de rapport de mesure est un seuil de rapport de mesure d'une cellule adjacente de réseau d'accès radio terrestre universel évolué E-UTRAN.
